# EUROPÄISCHE PATENTSCHRIFT

(11) **EP 0 920 589 B1**
(45) Veröffentlichungstag und Bekanntmachung des Hinweises auf die Patenterteilung: **28.04.2004**
(21) Anmeldenummer: 98938636.2
(22) Anmeldetag: 24.06.1998
(51) Int. Cl.: F04C 15/02, F04C 15/04

(54) **PUMPE ZUR FÖRDERUNG EINES MEDIUMS**
PUMP FOR CONVEYING A MEDIUM
POMPE POUR REFOULER UNE SUBSTANCE

(30) Priorität: 24.06.1997 DE 29723412 U
(43) Veröffentlichungstag der Anmeldung: 09.06.1999
(73) Patentinhaber: Luk Fahrzeug-Hydraulik GmbH & Co. KG, 61352 Bad Homburg (DE)
(72) Erfinder: NGUYEN, Van, Doan, D-61267 Neu-Anspach (DE); BREUER, Peter, D-61381 Friedrichsdorf (DE)
(74) Vertreter: Gleiss, Alf-Olav, Dr.jur. Dipl.-Ing.
(86) Internationale Anmeldenummer: PCT/EP1998/003850
(87) Internationale Veröffentlichungsnummer: WO 1998/059172

(56) Entgegenhaltungen:
- EP-A- 0 125 328
- EP-A- 0 151 657
- DE-A- 4 438 696
- US-A- 4 347 047

## Beschreibung

### Beschreibung

Die Erfindung betrifft eine Pumpe zur Förderung eines Mediums, insbesondere Hydrauliköls, gemäß Oberbegriff des Anspruchs 1.

Pumpen der hier angesprochenen Art sind bekannt. Sie werden beispielsweise in Kraftfahrzeugen für Lenkhelf- und/oder Bremskraftunterstützungssysteme sowie für hydraulische Federungen oder dergleichen eingesetzt. Betroffen sind hier Pumpen, die unmittelbar von der Brennkraftmaschine angetrieben sind und damit einen in Abhängigkeit von der Drehzahl variablen Volumenstrom beziehungsweise eine drehzahlabhängige Fördermenge zeigen. In den Fällen, in denen der an die Pumpe angeschlossene Verbraucher nur einen bestimmten maximalen Volumenstrom braucht, wird ein Stromregelventil vorgesehen, das den von der Pumpe an den Verbraucher abgegebenen Medienstrom begrenzt. Übersteigt die Förderleistung der Pumpe den maximalen Volumenstrom, so öffnet das Stromregelventil einen Abströmkanal, über den das von der Pumpe geförderte Medium zurück zur Saugseite der Pumpe gelangt. Es hat sich herausgestellt, daß bei hohen Drehzahlen in vielen Fällen Schäden durch Kavitation gegeben sind. Auch ergibt sich eine ungleichmäßige Saugleistung der Pumpe.

Aus der deutschen Offenlegungsschrift DE 44 38 696 A1 ist eine Flügelzellenpumpe mit einem Stromregelventil bekannt, auf dessen Regelkolben einerseits der Förderdruck und andererseits der Auslassdruck sowie eine Federkraft wirkt. Der Regelkolben arbeitet dabei als Druckwaage, wobei der Differenzdruck bei steigender Pumpendrehzahl als Messgröße für die abgeregelte Fördermenge dient. Der am Regelkolben abgeregelte Förderstrom wird über einen Abspritzkanal in einen Verteilerabschnitt eingeleitet, der über gebogene Saugarme mit Saugzonen in Verbindung steht. Der Verteilerabschnitt und die Saugarme schmiegen sich an eine Antriebswelle an, die als Stromteiler wirkt. Ein an einen Behälter angeschlossener Saugkanal mündet im Zentrum des Verteilerabschnitts und nicht in den Saugarmen. Die bekannte Pumpe hat den Nachteil, daß im Betrieb bei hohen Drehzahlen Kavitation auftreten kann, was zu Beschädigungen führen kann.

Es ist daher Aufgabe der Erfindung, eine Pumpe gemäß Oberbergriff des Patentanspruchs 1 so auszubilden, daß das Auftreten von Kavitation im Betrieb der Pumpe vermieden wird.

Zur Lösung dieser Aufgabe wird eine Pumpe vorgeschlagen, die die in Anspruch 1 genannten Merkmale aufweist. Dadurch, daß beide Teilstrahlen jeweils an einer Tanköffnung vorbeigeleitet werden, wird auf einfache Weise eine gleichmäßige beidseitige Aufladung der Pumpe sichergestellt, so daß eine gleichmäßige Saugleistung der Pumpe gewährleistet ist. Die Verwendung des Stift als Stromteiler statt der Antriebswelle liefert eine konstruktiv einfache und kostengünstige Lösung. Die Pumpe zeichnet sich dadurch aus, daß sie mit einem Abströmkanal versehen ist, in den ein Stromteiler hineinragt, der sich in einem Abstand zu der dem Stromregelventil zugewandten Mündung des Abströmkanals befindet und den in den Abströmkanal einschießenden Abströmstrahl teilt. Auf diese Weise ist es möglich, die nachteiligen Wirkungen der Kavitation praktisch ganz zu vermeiden.

Bevorzugt wird ein Ausführungsbeispiel der Pumpe, das sich dadurch auszeichnet, daß der Stromleiter als ein Formteil ausgebildet ist, welches mit einer Anströmnase versehen ist. Der von dem Stromregelventil freigegebene Abströmstrahl trifft mit hoher Geschwindigkeit auf diese Anströmnase und kann von dieser so abgelenkt werden, daß eine Kavitation praktisch ganz ausgeschlossen werden kann. Es ist also auf einfache Weise möglich Schäden durch Kavitation zu vermeiden.

Bei einem weiteren Ausführungsbeispiel der Pumpe ist der Stromteiler als -vorzugsweise zylindrischer- Stift ausgebildet, der so angeordnet ist, daß er von dem Abströmstrahl getroffen wird. Die Außenfläche des Stifts dient der Ablenkung des Abströmstrahls. Auf diese Weise können Nachteile durch Kavitation einfach und kostengünstig vermieden werden.

Weitere Ausgestaltungen ergeben sich aus den übrigen Unteransprüchen.

Die Erfindung wird im folgenden anhand der Zeichnung näher erläutert. Es zeigen:
- Figur 1: einen Querschnitt durch einen Bereich einer Pumpe und
- Figur 2: einen Längsschnitt entlang der in Figur 1 eingezeichneten Linie II-II.

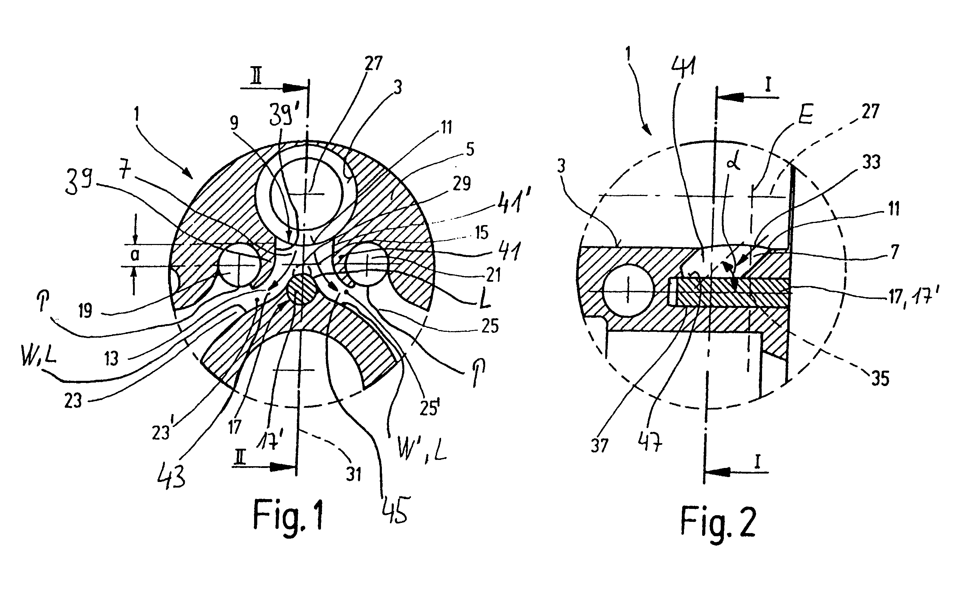

Die Schnittdarstellung in Figur 1 zeigt einen Ausschnitt aus einer Pumpe 1, die mit einem -senkrecht zur Ebene der Darstellung in Figur 1 angeordneten-Stromregelventil versehen ist, das in einer geeigneten Ventilbohrung 3 im Gehäuse 5 der Pumpe 1 untergebracht ist. Die Ventilbohrung 3 wird von einem Abströmkanal 7 geschnitten, der beispielsweise ebenfalls durch eine Bohrung realisiert ist. Es ist auch möglich, den Abströmkanal bei der Herstellung des Gehäuses 5 im Gießverfahren herzustellen.

Im Bereich der sich in die Ventilbohrung 3 öffnenden Mündung 9 des Abströmkanals wird eine Abströmkante 11 gebildet, die von einem Stromregelkolben des Stromregelventils in einer Funktionsstellung abgedeckt und in einer anderen Funktionsstellung freigegeben wird.

Die Funktion eines Stromregelventils ist grundsätzlich bekannt, so daß hier nur folgendes festgehalten wird: Der Stromregelkolben des Stromregelventils verschließt den Abströmkanal 7 im Stillstand der Pumpe und in einer ersten Funktionsphase, in der der gewünschte Volumenstrom für einen Verbraucher noch nicht erreicht ist. Der Stromregelkolben wird einerseits mit dem von der Pumpe bereitgestellten Druck und andererseits mit einer Federkraft beaufschlagt. Die Federkraft ist so eingestellt, daß ab dem gewünschten Volumenstrom der Abströmkanal 7 beziehungsweise die Abströmkante 11 freigegeben wird, so daß das unter hohem Druck stehende, von der Pumpe geförderte Medium in den Abströmkanal 7 einschießt.

Durch zwei Pfeile 13 und 15 wird angedeutet, daß der in den Abströmkanal 7 einschießende Abströmstrahl in zwei Teilstrahlen aufgeteilt wird. Diese Aufteilung erfolgt durch einen Stromteiler 17, der in den Abströmkanal 7 hineinragt und in einem Abstand a zur Abströmkante angeordnet ist. Der in den Abströmkanal 7 einschießende Abströmstrahl verläuft entlang der Außenfläche des Stromteilers 17, tritt aus dem Abströmkanal 7 aus und gelangt schießlich zum Saugbereich der Pumpe 1, der hier nicht dargestellt ist.

Die aus dem Abströmkanal 7 austretenden Teilstrahlen werden hier an zwei Tanköffnungen 19 und 21 vorbeigeführt, das heißt an Mündungen von Kanalabschnitten, die mit dem Tank der Pumpe 1 in Verbindung stehen. Die Teilstrahlen gelangen, nachdem sie am Stromteiler 17 vorbeigeführt wurden, in Kanalabschnitte 23 und 25, deren Durchmesser größer ist als der Bereich, in dem die Teilstrahlen an dem Stromteiler 17 vorbeigeführt werden. Es wird hier somit eine Injektorwirkung aufgebaut, so daß die Teilstrahlen das in dem Tank vorhandene Medium aus den Tanköffnungen 19 und 21 mitreißen und somit eine optimale Aufladung des Saugbereichs der Pumpe 1 gewährleisten. Es wird außerdem angestrebt, die Teilbereiche 23' und 25' kurz vor den Tanköffnungen 19 und 21 zu verengen, um die Geschwindigkeit der Teilstrahlen 13 und 15 zu erhöhen. Damit kann eine noch bessere Injektorwirkung erzielt werden.

Bei dem hier dargestellten Ausführungsbeispiel der Pumpe 1 sind beiden durch die Pfeile 13 und 15 angedeuteten Teilstrahlen des Abströmstrahls derartige Injektorwirkungen zugeordnet, da beide Teilstrahlen in Kanalabschnitte 23 und 25 mit einem größeren Strömungsquerschnitt geleitet werden.

In Figur 1 ist durch eine Schraffur angedeutet, daß der Stromteiler 17 als zylindrischer Stift ausgebildet sein kann, dessen Mittelachse hier parallel zur gedachten Mittelachse 27 der Ventilbohrung 3 verläuft. Es ist jedoch auch denkbar, daß der Stift beziehungsweise Stromteiler 17 unter einem Winkel gegenüber der Mittelachse 27 verläuft. Wesentlich ist, daß der Stromteiler 17 in dem Abströmkanal 7 angeordnet und in einem Abstand zur Abströmkante 11 liegt, um sicherzustellen, daß der Abströmstrahl in zwei Teilstrahlen aufgeteilt wird, was hier durch die Pfeile 13 und 15 angedeutet ist.

Gestrichelt ist in Figur 1 dargestellt, daß der Stromteiler 17 auch als Formteil ausgebildet sein kann, dessen Form von einem zylindrischen Stift abweicht und welches eine im Abstand a zur Abströmkante 11 angeordnete Anströmnase 29 aufweist. Ein derartiges Formteil kann eine in weiterer Annäherung parabelförmige Außenfläche zeigen, von der die durch die Pfeile 13 und 15 abgedeuteten Teilstrahlen des Abströmstrahls von einer gedachten Mittellinie 31 weggelenkt werden, so daß eine Aufteilung des Abströmstrahls gegeben ist. Die sich an den Stromteiler 17 -von der Abströmkante 11 stromab gelegenen- anschließenden Wandbereiche W und W', die die Teilstrahlen ablenken und die die Kanalabschnitte 23 und 25 begrenzen, sind so gekrümmt, daß die Teilstrahlen kavitationsfrei umgelenkt werden. Der Stromteiler ist damit Teil einer Leitfläche L, die die Teilstrahlen sanft ablenkt. Die Leitfläche L umfaßt also die Wandbereiche W und W' sowie die Fläche des Stromteilers 17, die die beiden Wandbereiche W und W' quasi miteinander verbindet. Ist der Stromleiter als Stift 17' realisiert, bildet ein Teil seiner Mantelfläche einen Teil der Leitfläche L. Sofern der Stromteiler 17 als Formteil mit der Anströmnase 29 realisiert ist, bildet eben diese Anströmnase 29 den Teil der Leitfläche L, der die Wandbereiche W und W' miteinander verbindet.

Aus Figur 1 wird deutlich, daß der Stromteiler 17 so im Abströmkanal 7 in der Nähe der Abströmkante 11 angeordnet ist, daß der von dem Stromregelventil freigegebene Abströmstrahl, wie durch die beiden Pfeile 13 und 15 angedeutet, aufgeteilt und abgelenkt wird, wobei die Außenfläche des Stromteilers 17 eine derartige Ablenkung der Teilstrahlen von der Mittellinie 31 nach außen bewirkt, daß eine Kavitation praktisch ausgeschlossen ist. Eine besondere einfache Ausführungsform des Stromteilers 17 ist, wie gesagt in einem zylindrischen Stift zu sehen, der vorzugsweise aus Hartmetall bestehen kann. Möglich ist es auch, ein Formteil mit einer Anströmnase 29 zu verwenden, welches noch weiter in den Abströmkanal 7 hineinragt und eine gleichmäßigere Auslenkung der Teilstrahlen bewirkt.

Figur 2 zeigt wiederum einen Ausschnitt einer Pumpe 1. Gleiche Teile sind mit gleichen Bezugsziffern versehen, so daß insofern auf die Beschreibung zu Figur 1 verwiesen wird. In Figur 2 ist eine Linie I-I eingezeichnet, die die in Figur 1 wiedergegebene Schnittebene andeutet.

Durch einen Pfeil 33 wird der in den Abströmkanal 7 einschießende Abströmstrahl angedeutet. Deutlich ist der Stromteiler 17 erkennbar, der hier als zylindrischer Stift ausgebildet ist, dessen Mittelachse 35 parallel zu der Mittelachse 27 der Ventilbohrung 3 verläuft. Aus dieser Darstellung wird besonders deutlich, daß der Stromteiler beziehungsweise zylindrische Stift auch einen Winkel mit der Mittelachse 27 einschließen kann. Wesentlich ist, daß der Stromteiler 17 innerhalb des Abströmkanals 7 in einem Abstand zur Abströmkante 11 angeordnet ist und damit eine optimale Aufteilung des Abströmstrahls bewirkt.

Bei der Aufteilung des Abströmstrahls wird sichergestellt, daß durch eine gleichmäßige Führung der Teilstrahlen eine Kavitation vermieden wird. Außerdem können die durch die Pfeile 13 und 15 dargestellten Teilstrahlen an den beiden Tanköffnungen 19 und 21 so vorbeigeführt werden, daß einen Injektorwirkung eintritt, aufgrund derer das von der Pumpe geförderte Medium aus den mit den Tanköffnungen 19 und 21 verbundenen Tank nachgesaugt wird. Damit wird eine gute Füllung der Pumpe 1 im Ansaugbereich gewährleistet, so daß auch hier Kavitationsschäden praktisch auszuschließen sind.

Es zeigt sich, daß der Stromteiler 17 eine gleichmäßige Verteilung des Abströmstrahls beziehungsweise des abgeregelten Ölstromes bewirkt und somit die Injektorwirkung der Pumpe unterstützt. Hierdurch ist es möglich, die Maximaldrehzahl der Pumpe deutlich über Drehzahlen anzuheben, die bei bekannten Pumpen realisierbar waren (9.000 U/min bei 1 bis 2 bar).

Gleichzeitig zeigt sich auch, daß der Stromteiler 17 auf einfache und damit preiswerte Weise realisierbar ist. Es ist auch, wie in den Figuren 1 und 2 ersichtlich ist, möglich, den Stromteiler innerhalb des Abströmkanals nahe an der Abströmkante anzuordnen, so daß durch die nachfolgenden Wandbereiche W und W' ein relativ langer Ablenkweg möglich ist, innerhalb dessen eine sanfte Ablenkung der Teilstrahlen realisierbar ist.

Der Stromteiler 17 kann bei der Herstellung der Pumpe 1 in deren Gehäuse 5 eingegossen werden. Es ist jedoch vorzugsweise auch möglich, den Stromteiler als separates Bauteil auszubilden, was die Pumpenherstellung vereinfacht. Damit ist auch die Herstellung des Stromteilers 17 einfach und preiswert möglich. Es ist sogar denkbar, bestehende Pumpen mit einem Stromteiler der hier angesprochenen Art nachzurüsten, also eine Bohrung 37 in das Gehäuse 5 einer bestehenden Pumpe einzubringen und dort einen als Stromteiler 17 dienenden zylindrischen Stift einzusetzen. Dabei ist es im übrigen möglich, auch als Formteil ausgebildete Stromteiler nachträglich in bestehende Pumpen einzusetzen.

Bei den Erläuterungen zu Figur 1 und 2 wurde allgemein davon ausgegangen, daß die Pumpe zur Förderung eines Mediums eingesetzt ist. Besonders bewährt hat sich die Verwendung dieser Pumpe im Zusammenhang mit der Förderung eines Hydrauliköls, welches in einem geeigneten Reservoir oder Tank vorhanden ist und über die Tanköffnungen 19 und 21 in den Saugbereich der Pumpe 1 eingesaugt werden kann. Dadurch, daß der Abströmstrahl durch den Stromteiler 17 an den Tanköffnungen 19 und 21 vorbeigeführt wird, wird das in dem Reservoir beziehungsweise Tank vorhandene Medium mitgerissen und dem Saugbereich der Pumpe zugeführt. Besonders günstig ist es, wie gesagt, wenn dabei jeweils ein Teilstrahl an jeweils einer Tanköffnung vorbeigeleitet wird, um auf einfache Weise eine gleichmäßige beidseitige Aufladung der Pumpe sicherzustellen.

In Figur 1 sind noch Leitschaufeln 39 und 41 dargestellt, die den Abströmkanal 7 seitlich begrenzen. Die Leitschaufeln 39 und 41 erstrecken sich von der Abströmkante 11 beziehungsweise von der Mündung 9 bis in die jeweiligen Kanalabschnitte 23 beziehungsweise 25 hinein. Ausgehend von der Abströmkante 11 verlaufen die dem Abströmkanal 7 zugewandten Wandabschnitte 39' und 41' der Leitschaufeln 39 und 41 zunächst etwa parallel zur Mittellinie 31, wobei sich die Wandabschnitte etwa in Höhe des Stromteilers 17 beziehungsweise der Anströmnase 29 nach außen, das heißt von der Mittellinie 31 abgewandt, erstrecken. In bevorzugter Ausführungsform weisen die den etwa senkrecht verlaufenden Wandabschnitten folgenden Wandabschnitte im wesentlichen die Form einer Parabel auf, so daß jeweils zwischen einer Leitschaufel 39 beziehungsweise 41 und dem zugehörigen Wandbereich W beziehungsweise W' der Leitfläche L eine Einschnürung 43 beziehungsweise 45 im jeweiligen Kanalabschnitt 23 beziehungsweise 25 gebildet ist. Durch die Einschnürungen 43 und 45 wird die Geschwindigkeit der Teilstrahlen des Abströmstrahls erhöht, wobei der sich wieder erweiternde Kanalabschnitt 23 beziehungsweise 25 wieder eine Geschwindigkeitsverringerung der Teilstrahlen bewirkt. Durch die erhöhte Geschwindigkeit der Teilstrahlen wird die Injektorwirkung verbessert, so daß die Saugwirkung an den Tanköffnungen 19 und 21 erhöht wird. Dadurch wird die Ansaugung von Öl aus dem Tank verbessert.

Die Leitschaufeln 39 und 41 sind an ihrer Außenseite der Kontur der Tanköffnungen 19 und 21 angepaßt, wobei die Tanköffnungen 19 und 21 kreisförmig ausgestaltet sein können.

Die Leitschaufeln 39 und 41 üben eine Doppelfunktion aus: Einerseits bilden sie zusammen mit den Wandbereichen W und W' der Leitfläche L die vorstehend erwähnte Einschnürung 43 beziehungsweise 45, so daß die Injektorwirkung erhöht werden kann; andererseits stellen die Leitschaufeln 39 und 41 eine Barriere für den in den Abströmkanal 7 einschießenden Abströmstrahl dar, so daß dieser beziehungsweise die Teilstrahlen nicht direkt in die Tanköffnungen 19 und 21 eintreten können. Eine Einspritzung von Öl in den Sauganschluß wird somit sicher verhindert. So ist in bevorzugter Ausführungsform vorgesehen, daß die Leitschaufeln 39 und 41 sich soweit in den zugehörigen Kanalabschnitt 23 beziehungsweise 25 hinein erstrecken beziehungsweise eine Höhe derart aufweisen, daß sie die entsprechende Tanköffnung 19 beziehungsweise 21 etwa bis zur Höhe ihres tiefsten Punktes P umschließen. Selbstverständlich ist es möglich, die Leitschaufeln kurz vor, oder kurz danach beziehungsweise am Punkt P enden zu lassen.

Dadurch, daß der Abströmstrahl beziehungsweise die Teilstrahlen durch die Leitschaufeln 39 und 41 und den Stromteiler 17 beziehungsweise die Leitfläche L geführt werden, liegen geringe Strömungsverluste vor. Dadurch verringert sich auch die Leistungsaufnahme der Pumpe. Darüber hinaus entstehen weniger Geräusche. Wie bereits vorstehend erwähnt, kann die Pumpe 1 mit einer gegenüber einer bekannten Pumpe erhöhten Drehzahl (ca. 9000 U/min) betrieben werden.

In Figur 2 ist der Abströmkanal 7 in Seitenansicht dargestellt. Es ist ersichtlich, daß der Abströmkanal 7 zur Mittelachse 35 in einem Winkel α verläuft, der insbesondere zwischen 30° und 60° liegen, vorzugsweise 45° betragen kann. Durch den schräg nach hinten verlaufenden Abströmkanal 7 wird der Abströmstrahl nach hinten in Richtung zu den Tanköffnungen 19 und 21 abgelenkt, so daß die Injektorwirkung unmittelbar an den Tanköffnungen 19 und 21 auftritt. Damit der Abströmstrahl durch den schräg nach hinten verlaufenden Abströmkanal 7 nicht in die Tanköffnungen 19 und 21 direkt einschießen kann, sind die Leitschaufeln 39 und 41 vorgesehen. Es zeigt sich also, daß sich durch den schräg nach hinten unter einem Winkel α verlaufenden Abströmkanal 7 die Injektorwirkung weiter verbessern läßt.

Die Leitschaufeln 39 und 41 erstrecken sich in die Tiefe, also gemäß Figur 1 durch die Bildebene hindurch, bis zu den zugehörigen Tanköffnungen 19 und 21. Nach vorne, also aus der Bildebene heraus, erstrecken sich die Leitschaufeln in bevorzugter Ausführungsform bis ca. 3/4 über die Tiefe des Abströmkanals hinaus, also gemäß Figur 2, etwa bis zu einer Ebene E, die von der Mittelachse 35 senkrecht durchlaufen wird. Es ist jedoch auch möglich, die Tiefe der Leitschaufeln 39 und 41 über die gesamte Tiefe des Abströmkanals 7 auszubilden. Die Enden beziehungsweise Stirnflächen der Leitschaufeln 39 und 41 können also je nach Tiefe der Leitschaufeln 39 und 41 mit der Ebene E zusammenfallen beziehungsweise links oder rechts (Figur 2) zur Ebene liegen. Es ist jedoch auch möglich, daß diese Stirnflächen in einem Winkel zur Ebene E verlaufen.

Dadurch, daß sich die Tiefe der Leitschaufeln 39 und 41 etwa von der Ebene E bis zu den Tanköffnungen 19 beziehungsweise 21 erstreckt, kann aus dem dem Strömungsteiler 17 zugewandten Mündungsbereich 47 kein Öl direkt in die Tanköffnungen 19 beziehungsweise 21 eintreten, so daß der durch die Injektorwirkung hervorgerufene Saugeffekt nicht beeinträchtigt wird. Selbstverständlich kann die Tiefe der Leitschaufeln 39 und 41 so bemessen sein, daß sie lediglich den Mündungsbereich 47 abdecken.

Selbstverständlich ist es möglich, eine Pumpe 1 lediglich mit einer Tanköffnung 19 oder 21 auszustatten, nämlich insbesondere bei einhübigen Flügelzellenpumpen, die nur eine Saug- und Druckniere besitzen. Demgemäß wird vorzugsweise auch nur eine Leitschaufel 39 oder 41 bereitgestellt. In bevorzugter Ausführungsform werden jedoch zwei Tanköffnungen 19 und 21 vorgesehen, denen dann jeweils eine der Leitschaufeln 39 und 41 zugeordnet ist.

## Patentansprüche

1. Pumpe zur Förderung eines Mediums, insbesondere Hydrauliköls, mit einem den von der Pumpe geförderten Medienstrom beeinflussenden Stromregelventil und mit einem von dem Stromregelventil freigebbaren Abströmkanal, welcher zur Saugseite der Pumpe führt, **gekennzeichnet durch** einen im Abströmkanal (7) angeordneten Stift (17), der in den Abströmkanal (7) hineinragt und dessen Mittelachse parallel zur gedachten Mittelachse (27) der Ventilbohrung des Stromregelventils verläuft und der in einem Abstand (a) zu der dem Stromregelventil zugewandten Mündung (9) des Abströmkanals (7) angeordnet ist, auf den der aus dem Abströmkanal (7) herausschießende Abströmstrahl aufprallt und in Teilströme aufgeteilt wird, wobei die Teilströme an Tanköffnungen (19,21) vorbeigeführt werden und das im Tank vorhandene Medium mitreißen, das dem Saugbereich der Pumpe (1) zugeführt wird.

2. Pumpe nach Anspruch 1, **dadurch gekennzeichnet, daß** der Stift eine Anströmnase (29) aufweist.

3. Pumpe nach einem der vorhergehenden Ansprüche, **dadurch gekennzeichnet, daß** die Außenfläche des Stifts Teil einer den Abströmstrahl führenden Leitfläche ist.

4. Pumpe nach einem der vorhergehenden Ansprüche, **dadurch gekennzeichnet, daß** der Abströmkanal (7) zumindest eine Leitschaufel (39;41 ) aufweist, die sich von der Abströmkante (11) beziehungsweise von der Mündung (9) des Abströmkanals (7) in den Abströmkanal (7) hinein erstreckt.

5. Pumpe nach einem der vorhergehenden Ansprüche, **dadurch gekennzeichnet, daß** sich der dem Abströmkanal (7) zugewandte Wandabschnitt (39';41') der Leitschaufel (39;41) senkrecht nach unten beziehungsweise parallel zu der Mittelachse (27) erstreckt, um dann etwa ab Höhe des Mündungsbereichs (47) des Abströmkanals (7) beziehungsweise ab Höhe des Stromteilers (17) von der Mittellinie (27) weggerichtet zu verlaufen.

6. Pumpe nach einem der vorhergehenden Ansprüche, **dadurch gekennzeichnet, daß** die Leitschaufel (39;41) mit einer Wandung (W;W') der Leitfläche (L) eine Einschnürung (43;45) in einem Kanalabschnitt (23;25) des Abströmkanals (7) bildet.

7. Pumpe nach Anspruch 6, **dadurch gekennzeichnet, daß** sich der Kanalabschnitt (23;25) -stromabwärts gesehen- nach der Einschnürung (43;45) wieder erweitert.

8. Pumpe nach einem der vorhergehenden Ansprüche, **dadurch gekennzeichnet, daß** sich die Leitschaufel (39;41) in der Tiefe des Abströmkanals (7) in axialer Richtung erstreckt.

9. Pumpe nach Anspruch 8, **dadurch gekennzeichnet, daß** das Ende beziehungsweise die Stirnfläche der Leitschaufel (39;41 ) parallel oder in einem Winkel zu der Ebene (E) verläuft.

10. Pumpe nach einem der vorhergehenden Ansprüche, **dadurch gekennzeichnet, daß** jeder Tanköffnung (19;21) eine Leitschaufel (39;41) zugeordnet ist.

## Claims

1. Pump for the conveying of a medium, especially of hydraulic oil, with a flow regulating valve which influences the medium flow to be conveyed by the pump, and with a drainage channel that is unblocked by the said flow regulating valve, which leads to the suction side of the pump, **characterised in that** the same incorporates a pin (17) that is positioned within the drainage channel (7), whereby the same projects into the said drainage channel (7), and whose central axis runs in parallel with an imagined central axis (27) of the valve bore of the flow regulating valve, and which further extends at a distance (a) from the mouth (9) of the drainage channel (7) that is directed towards the flow regulating valve, onto which the drainage flow exiting from the drainage channel (7) will impact and divide into part flows, whereby the part flows are routed past tank openings (19,21) and drag with them the medium within the said tank, which is being transported towards the suction area of the pump (1).

2. Pump according to claim 1, **characterised in that** the pin incorporates a streaming lug (29).

3. Pump according to one of the preceding claims, **characterised in that** the external surface of the pin represents a part of a guide surface that guides the drainage flow.

4. Pump according to one of the preceding claims, **characterised in that** the drainage channel (7) incorporates at least one guide vane (39;41), which extends from the drainage edge (11), i.e. from the mouth (9) of the drainage channel (7) into the drainage channel (7).

5. Pump according to one of the preceding claims, **characterised in that** the wall section (39';41') of the guide vane (39;41) that is directed towards the drainage channel (7) extends perpendicularly downwards, i.e. in parallel to the central axis (27), in order to then proceed in a direction facing away from the said central line (27) approximately from the height of the mouth area (47) of the drainage channel (7), i.e. from the height of the flow divider (17).

6. Pump according to one of the preceding claims, **characterised in that** the guide vane (39;41) forms a narrowing (43;45) within one channel section (23;25) of the drainage channel (7) together with a wall (W;W') of the guide surface (L).

7. Pump according to claim 6, **characterised in that** the channel section (23;25) - when viewed in a downstream direction - expands again following the narrowing (43;45).

8. Pump according to one of the preceding claims, **characterised in that** the guide vane (39;41) extends in an axial direction within the depth of the drainage channel (7).

9. Pump according to claim 8, **characterised in that** the end, i.e. the facing surface of the guide vane (39;41) runs in parallel with or at an angle to the plane (E).

10. Pump according to one of the preceding claims, **characterised in that** a guide vane (39;41) is allocated to each one of the tank openings (19;21).

## Revendications

1. Pompe pour refouler un fluide ou une substance fluide, en particulier des huiles hydrauliques, avec un clapet de régulation de débit influençant le débit de fluide refoulé par la pompe et avec un canal de fuite ou d'évacuation pouvant être ouvert par le clapet de régulation de débit, conduisant au côté aspiration de la pompe, **caractérisée par** une broche (17) disposée dans le canal de fuite (7), qui fait saillie dans le canal de fuite ou d'évacuation (7), dont l'axe central est parallèle à l'axe central imaginaire (27) de l'orifice du clapet de régulation de débit et qui se situe à une distance (a) de l'embouchure (9) du canal de fuite (7) tournée vers le clapet de régulation de débit, à laquelle le jet de fuite ou d'évacuation provenant du canal de fuite (7) se heurte et est divisé en courants ou flux partiels, les courants partiels étant guidés devant des ouvertures du réservoir (19, 21) et entraînant le fluide présent dans le réservoir, lequel fluide est amené à la partie aspiration de la pompe (1).

2. Pompe selon la revendication 1, **caractérisée par le fait que** la broche présente un ergot ou nez d'incidence (29).

3. Pompe selon l'une des revendications précédentes, **caractérisée par le fait que** la surface extérieure de la broche fait partie d'une surface directrice guidant le jet de fuite.

4. Pompe selon l'une des revendications précédentes, **caractérisée par le fait que** le canal de fuite (7) présente au moins une aube directrice (39 ; 41) qui s'étend du bord de fuite (11), c'est-à-dire de l'embouchure (9) du canal de fuite (7), dans le canal de fuite (7).

5. Pompe selon l'une des revendications précédentes, **caractérisée par le fait que** la section de paroi (39' ; 41') des aubes directrices (39 ; 41) tournée vers le canal de fuite (7) s'étend perpendiculairement vers le bas, c'est-à-dire parallèlement à l'axe central (27), pour ensuite, à peu près à partir de la hauteur de la zone d'embouchure (47) du canal de fuite (7), c'est-à-dire à partir de la hauteur du diviseur de débit (17), s'éloigner de la ligne centrale (27).

6. Pompe selon l'une des revendications précédentes, **caractérisée par le fait que** l'aube directrice (39 ; 41) forme avec une paroi (W ; W') de la surface directrice (L) un resserrement (43 ; 45) dans une section de canal (23 ; 25) du canal de fuite (7).

7. Pompe selon la revendication 6, **caractérisée par le fait que** la section de canal (23 ; 25) s'élargit de nouveau - vu vers l'aval - après le resserrement (43 ; 45).

8. Pompe selon l'une des revendications précédentes, **caractérisée par le fait que** l'aube directrice (39 ; 41) s'étend en direction axiale dans la profondeur du canal de fuite (7).

9. Pompe selon la revendication 8, **caractérisée par le fait que** l'extrémité, c'est-à-dire la surface terminale, de l'aube directrice (39 ; 41) est parallèle au plan (E) ou fait un angle avec lui.

10. Pompe selon l'une des revendications précédentes, **caractérisée par le fait qu'**à chaque ouverture du réservoir (19 ; 21) est associée une aube directrice (39; 41).
